# EUROPÄISCHE PATENTSCHRIFT

(11) **EP 2 131 985 B1**
(45) Veröffentlichungstag und Bekanntmachung des Hinweises auf die Patenterteilung: **06.01.2016**
(21) Anmeldenummer: 08708753.2
(22) Anmeldetag: 06.02.2008
(51) Int. Cl.: B23D 51/02, B23Q 9/00, B27G 5/02, B23D 51/04

(54) **AUFNAHME- UND FÜHRUNGSVORRICHTUNG ZUR AUFNAHME EINES WERKSTÜCKS UND FÜHRUNG EINES ZERSPANUNGSWERKZEUGS**
RECEIVING AND GUIDING DEVICE FOR RECEIVING A WORK PIECE AND GUIDING A CUTTING TOOL
DISPOSITIF DE RÉCEPTION ET DE GUIDAGE DESTINÉ À RECEVOIR UNE PIÈCE ET À GUIDER UN OUTIL D'ENLÈVEMENT DE COPEAUX

(30) Priorität: 29.03.2007 DE 102007015091
(43) Veröffentlichungstag der Anmeldung: 16.12.2009
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2008/051462
(87) Internationale Veröffentlichungsnummer: WO 2008/119580

(56) Entgegenhaltungen:
- EP-A- 0 674 962
- DE-A1- 10 107 847
- DE-A1- 19 904 874
- US-A- 4 096 777
- US-A- 4 685 369
- US-B1- 6 581 502

## Beschreibung

Die Erfindung bezieht sich auf eine Aufnahme- und Führungsvorrichtung zur Aufnahme eines Werkstücks und zur Führung eines Zerspanungswerkzeugs, insbesondere eines handgeführten Werkzeugs wie eine Stichsäge.

### Stand der Technik

Aus der US 6 581 502 A1 ist eine Aufnahme- und Führungsvorrichtung zur Aufnahme eines Werkstücks und zur Führung eines Zerspanungswerkzeuges gemäß dem Oberbegriff des Anspruchs 1 bekannt. Die Aufnahme- und Führungsvorrichtung besteht aus einem Aufnahmegestell mit einer Auflagefläche für das Werkstück und einer zwischen einer Funktions- und einer Außerfunktionsposition verstellbaren Führungsschiene für das Zerspanungswerkzeug. An der Aufnahme- und Führungsvorrichtung ist ein Stützarm angeordnet, an dem die Führungsschiene in der Funktionsposition abgestützt ist, wobei der Stützarm und die Führungsschiene zueinander eine Relativbewegung ausüben können.

Aus der DE 199 04 874 A1 ist eine Vorrichtung zur Sägeblattführung bekannt, wobei eine bogenförmige Führungseinrichtung an einer Gerätefußplatte ausgeführt ist.

### Offenbarung der Erfindung

Der Erfindung liegt die Aufgabe zugrunde, eine konstruktiv einfach aufgebaute und vielseitig einsetzbare sowie transportable Aufnahme- und Führungsvorrichtung zur Aufnahme eines Werkstücks und zur Führung eines Zerspanungswerkzeugs anzugeben.

Diese Aufgabe wird erfindungsgemäß mit den Merkmalen des Anspruches 1 gelöst. Die Unteransprüche geben zweckmäßige Weiterbildungen an.

Die erfindungsgemäße Aufnahme- und Führungsvorrichtung, welche insbesondere für ein Handzerspanungswerkzeug wie beispielsweise eine Stichsäge oder eine Fräse eingesetzt wird, besteht aus einem Aufnahmegestell, welches mit einer Auflagefläche für das Werkstück versehen ist, einer Führungsschiene, die eine Führungseinrichtung für die Führung des Zerspanungswerkzeugs aufweist und einem Stützarm, an dem sich die Führungsschiene in ihrer Funktionsposition abstützt. Die Führungsschiene ist zwischen der Funktionsposition, in welcher das Werkstück bearbeitet werden kann, und einer Außerfunktionsposition zu verstellen. Des Weiteren ist vorgesehen, dass der Stützarm und die Führungsschiene zueinander eine Relativbewegung ausüben können.

Diese Aufnahme- und Führungsvorrichtung zeichnet sich durch eine kompakte Ausführung aus und kann mit verhältnismäßig geringem Aufwand transportiert werden. Die verschiedenen Bauteile der Vorrichtung können demontiert und Platz sparend verstaut und am Einsatzort mit wenig Aufwand montiert werden.

Die Vorrichtung ermöglicht ein passgenaues Zuschneiden von Werkstücken wie z.B. Paneelen oder Fußbodenbrettern, indem das Zerspanungswerkzeug in der Führungseinrichtung der Führungsschiene geführt wird. Die Relativbewegungsmöglichkeit zwischen der Führungsschiene und dem Stützarm, auf dem die Führungsschiene in ihrer Funktionsposition aufliegt, erlaubt es, im montierten Zustand der Vorrichtung die Position der Führungsschiene auf das zu bearbeitende Werkstück anzupassen. Dies wird insbesondere dadurch ermöglicht, dass der Stützarm einen Teil der Auflagefläche bildet, die zur Aufnahme des zu bearbeitenden Werkstücks vorgesehen ist. Die Auflagefläche befindet sich zum einen im Aufnahmegestell und zum andern teilweise auch am Stützarm, wobei ggf. der Stützarm in das Aufnahmegestell einragen kann und hierdurch einen Abschnitt der Auflagefläche innerhalb des Aufnahmegestells bildet.

Die Verstellmöglichkeit der Führungsschiene gegenüber dem Stützarm, auf dem das Werkstück wenigstens teilweise aufliegt, besteht vorteilhaft in einer Höheneinstellbarkeit, um den Abstand zwischen der Oberseite des Stützarmes und der Unterseite der Führungsschiene auf die Dicke des Werkstückes anpassen zu können. In der Funktionsposition ist das Werkstück zwischen Stützarm und Führungsschiene eingeklemmt. Das Zerspanungswerkzeug, beispielsweise die Hubsäge, wird in der Funktionsposition in der Führungseinrichtung der Führungsschiene entlang geführt, wobei das Sägeblatt des Werkzeugs durch die Führungsschiene hindurchragt und das Werkstück durchsägt. Die Führungseinrichtung ist insbesondere als Führungsnut ausgeführt, in der das Sägeblatt bzw. die Fräse geführt ist. Möglich ist aber auch ein seitliches Entlangführen an einer Seitenkante der Führungsschiene, die in diesem Fall die Führungseinrichtung bildet.

Erfindungsgemäß ist die Führungsschiene verschwenkbar zwischen der Funktions- und der Außerfunktionsposition gehalten. Hierfür ist ein Schwenkgelenk vorgesehen, welches die Relativverschwenkbarkeit der Führungsschiene gegenüber dem Stützarm erlaubt und vorteilhafterweise zugleich die Führungsschiene und den Stützarm am Aufnahmegestell sichert. Das Schwenkgelenk ermöglicht insbesondere ein Aufschwenken der Führungsschiene um eine horizontale Achse.

Erfindungsgemäß ist vorgesehen, dass die Führungsschiene verdrehbar am Aufnahmegestell gelagert ist. Die Verdrehbarkeit ermöglicht insbesondere eine rotatorische Bewegung in der bzw. parallel zur Ebene der Auflagefläche, beispielsweise um einen Winkelbetrag von +/- 45° gegenüber einer Mittellage, in der sich die Führungsschiene orthogonal zur Längsrichtung der Auflagefläche bzw. des Aufnahmegestells befindet. Die Verdrehbarkeit der Führungsschiene wird-vorzugsweise auch von dem Stützarm mit ausgeführt. Zur Durchführung der Drehbewegung ist ein Drehgelenk vorgesehen, welches gemäß einer bevorzugten Ausführung einteilig mit dem Schwenkgelenk ausgeführt ist, das die Aufschwenkbewegung der Führungsschiene gegenüber dem Stützarm möglich macht. Zugleich sichert dieses Gelenk sowohl den Stützarm als auch die aufliegende Führungsschiene am Aufnahmegestell.

Der Führungseinrichtung an der Führungsschiene ist vorteilhaft eine korrespondierende Einrichtung im Stützarm zugeordnet, um sicherzustellen, dass das Sägeblatt in Vertikalrichtung bis zum Stützarm reichen kann, ohne diesen zu beschädigen. Die Einrichtung an dem Stützarm ist bevorzugt ebenfalls als Nut ausgeführt, in die das Sägeblatt bzw. das Fräsblatt bei der Bearbeitung eintaucht.

Die Führungsnut kann zumindest abschnittsweise zu einer Führungsausnehmung erweitert sein, die im Vergleich zur Führungsnut eine signifikant größere Breite aufweist, wodurch die Möglichkeit gegeben ist, bezogen auf die Längsachse der Führungsnut eine im Rahmen der Breite der Führungsausnehmung winklige Bearbeitung des Werkstückes vorzunehmen. Dies ermöglicht insbesondere das Sägen von Gehrungen in das Werkstück. Vorteilhaft ist in den Stützarm eine entsprechend verbreiterte Ausnehmung eingebracht, in der sich das durch die Führungsausnehmung hindurchragende Werkzeug bewegen kann. Alternativ kann es aber auch zweckmäßig sein, den Stützarm in der Länge verkürzt auszubilden, so dass die Führungsausnehmung in der Führungsschiene über die Stirnseite des Stützarmes herausragt. Für eine optimale Führung ist es aber zweckmäßig, die Länge des Stützarmes auf diejenige der Führungsschiene anzupassen, so dass die Führungsschiene vollständig auf dem Stützarm abgestützt ist.

Des Weiteren ist es zweckmäßig, an der freien, dem Aufnahmegestell abgewandten Stirnseite der Führungsschiene ein Befestigungselement wie z.B. einen Stift anzuordnen, der in der Funktionsposition der Führungsschiene zur Lagefixierung am Stützarm dient. Auf diese Weise kann das zu bearbeitende Werkstück im Zwischenraum zwischen Stützarm und Führungsschiene festgeklemmt werden. Gegebenenfalls ist aber auch an dieser Stelle eine Höheneinstelleinrichtung zur veränderlichen Einstellung der Relativhöhe der Führungsschiene gegenüber dem Stützarm vorgesehen.

Die Werkstückauflageflächen des Aufnahmegestells sowie des Stützarmes und die Unterseite der Führungsschiene können mit gummierten Zonen versehen sein, um ein Verrutschen des Werkstückes trotz der Einklemmung zu verhindern.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer Aufnahme- und Führungsvorrichtung zur Aufnahme eines Werkstücks und zur Führung eines Zerspanungswerkzeugs, mit einem Aufnahmegestell, das eine Auflagefläche für das Werkzeug aufweist, einem seitlich ausragenden Stützarm und einer im hochgeklappten Zustand dargestellten Führungsschiene in Außerfunktionsposition,
- Fig. 2: die Aufnahme- und Führungsvorrichtung in der Funktionsposition, in der ein Werkstück zwischen dem Stützarm und der Führungsschiene eingeklemmt ist, wobei auf die Oberseite der Führungsschiene eine Hubstichsäge aufgesetzt ist, die entlang einer Führungsnut in der Führungsschiene bewegt wird,
- Fig. 3: die Aufnahme- und Führungsvorrichtung ohne eingespanntes Werkstück,
- Fig. 4: die Aufnahme- und Führungsvorrichtung mit Stützblöcken, die vom Aufnahmegestell losgelöst und links und rechts von der freien Stirnseite des Stützarmes bzw. der Führungsschiene angeordnet sind,
- Fig. 5: das Aufnahmegestell in Einzeldarstellung,
- Fig. 6: das Schwenk- und Drehgelenk, über das die Führungsschiene und der Stützarm verdrehbar am Aufnahmearm gehalten sind und das zugleich eine Aufschwenkbewegung der Führungsschiene gegenüber dem Stützarm ermöglicht,
- Fig. 7: eine Fig. 6 entsprechende Darstellung, jedoch mit aufgeschwenkter Führungsschiene,
- Fig. 8: eine teilweise freigeschnittene Darstellung aus dem Bereich des Schwenk- und Drehgelenks, mit einer Feststelleinrichtung zur Arretierung der Winkelposition der Führungsschiene,
- Fig. 9: einen Schnitt durch das Schwenk- und Drehgelenk, mit einer Stellschraube, die durch das Gelenk geführt und über die die Führungsschiene gegenüber dem Stützarm höheneinstellbar ist, dargestellt in einer Position, in der die Führungsschiene nur geringfügig oberhalb des Stützarms übersteht,
- Fig. 10: eine Fig. 9 entsprechende Darstellung, jedoch mit der Führungsschiene in größerem vertikalem Abstand zum Stützarm,
- Fig. 11: in perspektivischer Ansicht einen Schnitt durch den stirnseitigen Bereich von Führungsschiene und Stützarm, mit einer Arretiereinrichtung, über die die Führungsschiene am Stützarm arretiert wird,
- Fig. 12: einen Längsschnitt durch den stirnseitigen Bereich von Führungsschiene und Stützarm, mit einer Befestigungs- und Höheneinstelleinrichtung.

In den Figuren sind gleiche Bauteile mit gleichen Bezugszeichen versehen.

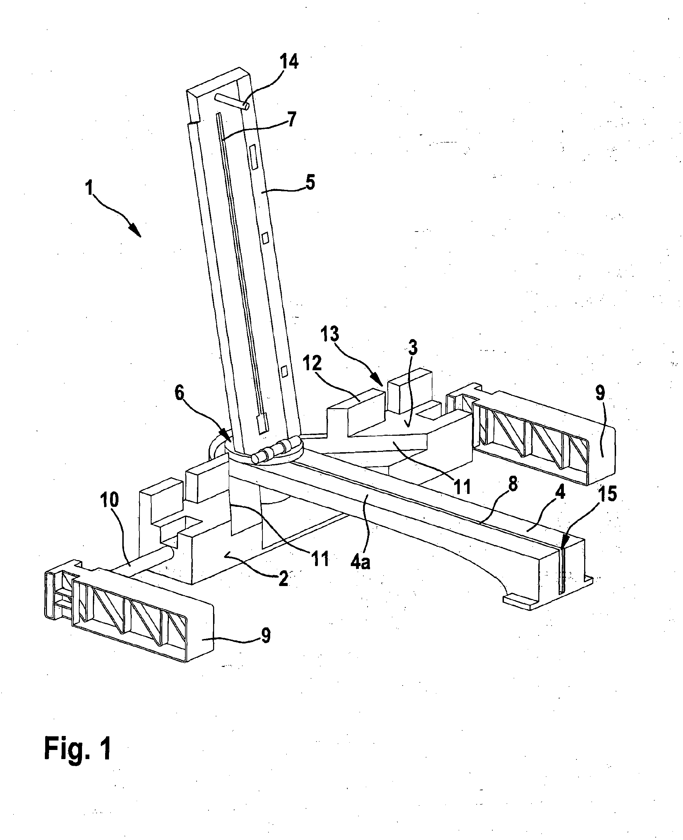

Die in Fig. 1 dargestellte Aufnahme- und Führungsvorrichtung 1 dient zur Aufnahme eines Werkstückes und zur Führung eines Zerspanungswerkzeuges, insbesondere einer handgeführten Stichsäge oder einer Fräse über das zu bearbeitende Werkstück. Die Aufnahme- und Führungsvorrichtung 1 umfasst ein Aufnahmegestell 2, das mit einer Auflagefläche 3 für das Werkstück versehen ist, einen Stützarm 4 und eine Führungsschiene 5. Gegenüber der Längsachse des Aufnahmegestells 2 bzw. der Auflagefläche 3 erstrecken sich in der in Fig. 1 dargestellten Situation Stützarm 4 und Führungsschiene 5 orthogonal zum Aufnahmegestell 2. Der Stützarm 4 dient zum Abstützen der Führungsschiene 5, beide Bauteile sind über ein kombiniertes Schwenk- und Drehgelenk 6 am Aufnahmegestell 2 gehalten. Die Führungsschiene 5 ist in Fig. 1 in ihrer hochgeschwenkten Außerfunktionsposition dargestellt. Zum Überführen in die Funktionsposition wird die Führungsschiene 5 um eine horizontale Achse des Schwenk- und Drehgelenks 6 nach unten auf den Stützarm 4 geklappt.

Zur Führung des Werkzeugs ist in die Führungsschiene 5 eine in Längsrichtung der Führungsschiene verlaufende Führungsnut 7 eingebracht. Der Führungsnut 7 ist im Stützarm 4 ein korrespondierender Sägeschlitz 8 zugeordnet. Zur Bearbeitung des Werkstücks, welches auf die Auflagefläche 3 aufgelegt wird, ragt das Werkzeug durch die Führungsnut 7 hindurch und in den Sägeschlitz 8 ein.

Des Weiteren sind stirnseitige Abstützblöcke 9 vorgesehen, die über eine Verbindungsstange 10 mit dem Aufnahmegestell 2 verbunden sind. Der axiale Abstand ist über ein Einschieben der Verbindungsstange 10 in eine entsprechende Aufnahme im Aufnahmegestell 2 veränderlich einstellbar. Die Abstützblöcke 9 können ggf. auch vollständig entfernt werden.

Stützarm 4 und Führungsschiene 5 können mittels des Schwenk- und Drehgelenks 6 um eine Hochachse gegenüber dem Aufnahmegestell 2 - verdreht werden, wobei sowohl ein gemeinsames Verdrehen als auch ein einzelnes Verdrehen entweder nur des Stützarms oder nur der Führungsschiene möglich ist. Das Schwenk- und Drehgelenk 6 befindet sich im Bereich einer Seitenkante des Aufnahmegestells 2, so dass sich der Stützarm 4 sowie im heruntergeklappten Zustand auch die Führungsschiene 5 quer über das Aufnahmegestell 2 erstrecken. Hierbei ist die axiale Höhenpositionierung des Stützarms 4 auf die Auflagefläche 3 angepasst, derart, dass die Oberseite 4a des Stützarmes zumindest im Bereich des Aufnahmegestells 2 einen Teil der Auflagefläche 3 bildet.

Gegenüber der in Fig. 1 dargestellten Mittellage, in der der Stützarm 4 orthogonal zur Längsachse des Aufnahmegestells 2 positioniert ist, kann der Stützarm 4 und damit auch die Führungsschiene 5 um einen Winkel von beispielsweise +/- 45° um die Hochachse des Gelenks 6 verdreht werden. Zur Begrenzung der Drehbewegung sind im Aufnahmegestell Begrenzungsanschläge 11 vorgesehen, die winklig zueinander angeordnet sind und den maximalen Winkelbereich begrenzen, innerhalb dem der Stützarm 4 und die Führungsschiene 5 verdreht werden können.

Die Auflagefläche 3 im Aufnahmegestell 2 ist an einer Seite von einer Stützwand 12 begrenzt. In diese Stützwand 12 sind mehrere Ausnehmungen 13 eingebracht, die zur Aufnahme von Spanneinrichtungen zum Spannen des Werkstückes dienen.

Im Bereich der freien Stirnseite ist auf der Unterseite der Führungsschiene 5 ein Dorn oder Stift 14 angeordnet, der bei heruntergeklappter Führungsschiene 5 in eine zugeordnete Ausnehmung 15 im Stützarm 4 einragt, wodurch die Führungsschiene eine zusätzliche Lagefixierung erfährt.

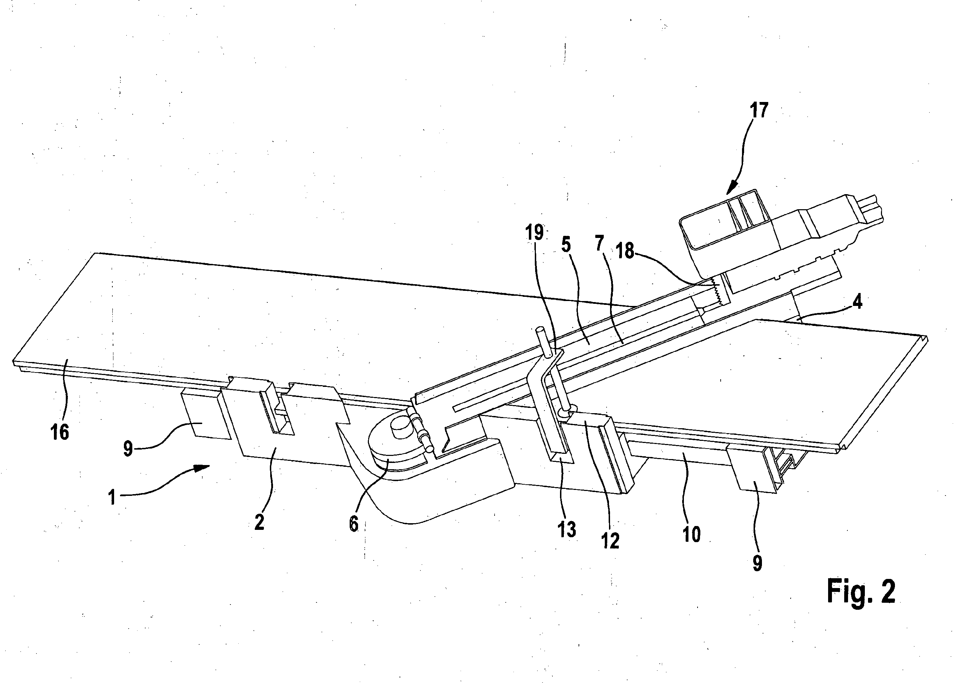

In Fig. 2 ist die Führungsschiene 5 in ihrer heruntergeklappten, auf dem Stützarm 4 aufliegenden Funktionsposition dargestellt. Auf die Auflagefläche 3 des Aufnahmegestells 2 ist ein Werkstück 16 zur Bearbeitung aufgelegt, beispielsweise ein Holzpaneel. Auf die Führungsschiene 5 ist ein handgeführtes Zerspanungswerkzeug 17 aufgesetzt, insbesondere eine Stichsäge, deren Sägeblatt 18 in der Führungsnut 7 in der Führungsschiene 5 geführt ist. Das Werkstück 16 ist zwischen dem Stützarm 4 und der Führungsschiene 5 eingeklemmt. Im Ausführungsbeispiel gemäß Fig. 2 sind Stützarm 4 und Führungsschiene 5 gemeinsam um die Hochachse des Schwenk- und Drehgelenks 6 verdreht und befinden sich in einer bezogen auf die Längsachse des Aufnahmegestells 2 schiefwinkligen Position mit einer etwa 45°-Auslenkung gegenüber der orthogonalen Mittellage.

Zu erkennen ist in Fig. 2 auch eine Spanneinrichtung 19, die in eine Ausnehmung 13 in der Stützwand 12 des Aufnahmegestells 2 eingesetzt ist und das Werkstück 16 auf der Auflagefläche festspannt.

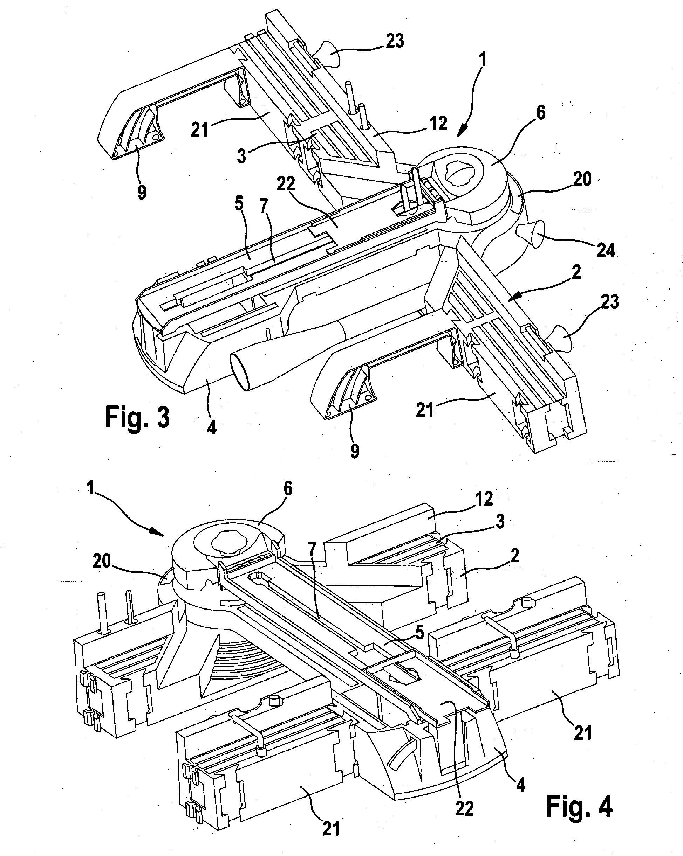

In den Figuren 3 und 4 ist eine Modifikation der Aufnahme- und Führungsvorrichtung 1 dargestellt. Das Aufnahmegestell 2 der Aufnahme- und Führungsvorrichtung weist zwei als separate Bauteile ausgeführte, an jeweils einer Stirnseite ansetzbare Auflageblöcke 21 auf, über die die Auflagefläche 3 in Achsrichtung verlängerbar ist. Mithilfe einer Fixiereinrichtung 23 ist jeder Auflageblock 21 am mittleren Teil des Auflagegestells 2 zu fixieren. Die Abstützblöcke 9 können, wie Fig. 3 zu entnehmen, entweder am zentralen Abschnitt des Aufnahmegestells 2 oder an einem der Auflageblöcke 21 angeordnet werden.

Wie in Fig. 4 dargestellt, können die Auflageblöcke 21 auch von dem zentralen Abschnitt des Aufnahmegestells 2 gelöst und beispielsweise im Bereich der freien Stirnseite von Stützarm 4 und Führungsschiene 5 angeordnet werden. Hierdurch ist es möglich, parallel zu dem auf der Aufnahmefläche 3 des Aufnahmegestells 2 aufliegenden Werkstückes ein weiteres Werkstück auf die Auflagefläche der Auflageblöcke 21 aufzulegen.

Das Schwenk- und Drehgelenk 6 ist in eine teilkreisförmige Lageraufnahme 20 eingesetzt, welche einteilig am Aufnahmegestell 2 ausgebildet ist. Die Lageraufnahme 20 ragt in Querrichtung über die Seitenwand 12 des Aufnahmegestells 2 hinaus. An der Lageraufnahme 20 ist eine Feststelleinrichtung 24 angeordnet, über die die aktuelle Winkelposition des Schwenk- und Drehgelenks 6, bezogen auf eine Verdrehung um die Hochachse des Gelenks, arretiert werden kann.

Außerdem ist auf der Oberseite der Führungsschiene 5 eine Führungsplatte 22 in Richtung der Führungsnut 7 verschieblich angeordnet. Auf diese Führungsplatte 22 kann das Zerspanungswerkzeug mit seiner Unterseite aufgesetzt werden.

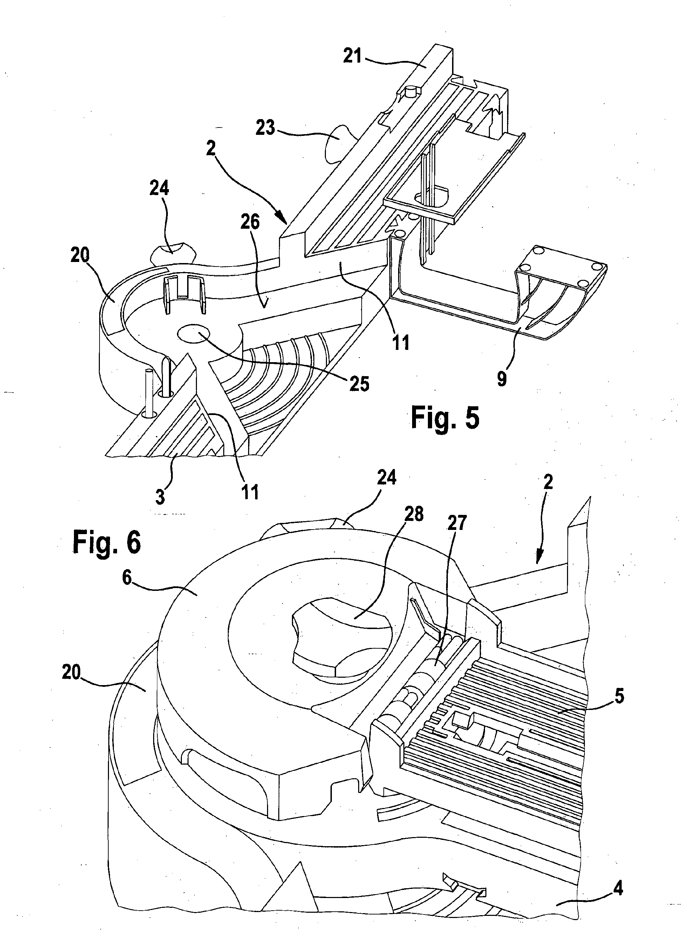

In Fig. 5 ist die Lageraufnahme 20 im Aufnahmegestell 2 im Detail dargestellt. Zu erkennen ist, dass in die Bodenplatte der Lageraufnahme 20 eine Aufnehmung 25 zur Aufnahme eines Lagerstiftes oder dergleichen des Schwenk- und Drehgelenks 6 eingebracht ist. Der Boden 26 der Lageraufnahme 20 wird von den seitlichen, winklig zueinander angeordneten Begrenzungswänden bzw. -anschlägen 11 begrenzt, die die Winkelauslenkung von Stützarm 4 bzw. Führungsschiene 5 begrenzen. Der Boden 26 ist gegenüber der Auflagefläche 3 abgesenkt, wobei die Höhendifferenz zur Auflagefläche 3 von dem auf dem Boden 26 aufliegenden Stützarm ausgefüllt wird. Der Stützarm bildet in diesem Bereich einen Teil der Auflagefläche für das Werkstück.

Außerdem ist in Fig. 5 dargestellt, dass der Abstützblock 9 im Vergleich zur Darstellung nach Fig. 3 in umgedrehter Lage angeordnet werden kann, derart, dass eine zentrale, U-förmige Ausnehmung im Abstützblock 9 wahlweise nach unten (Fig. 3) oder nach oben (Fig. 5) hin offen ist.

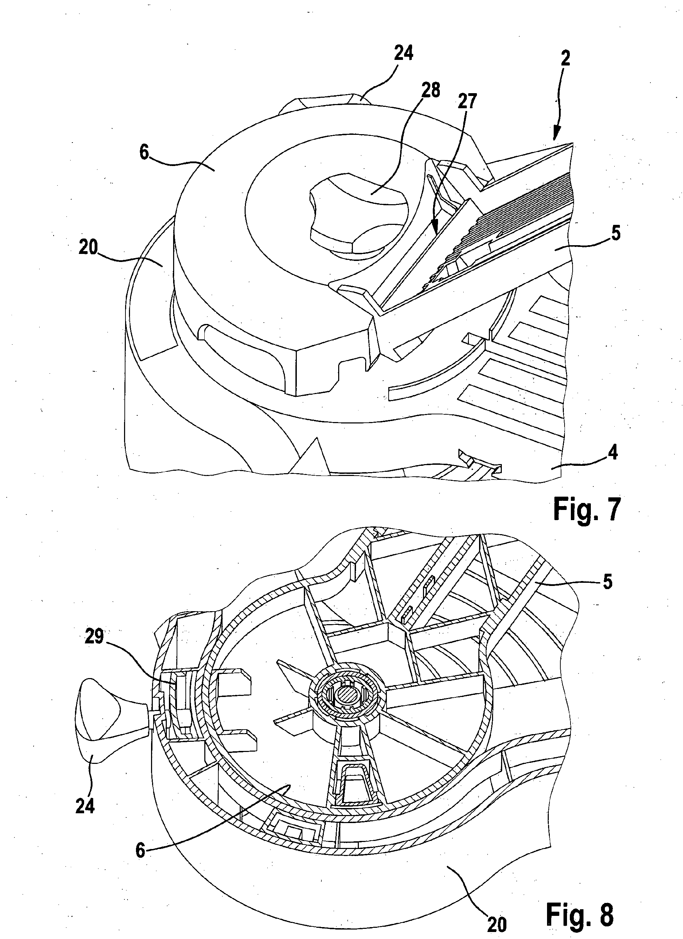

Die Figuren 6 und 7 zeigen einen Ausschnitt aus dem Tragegestell 2 im Bereich der Lageraufnahme 20 mit darin eingesetztem Schwenk- und Drehgelenk 6. Das Schwenk- und Drehgelenk 6 weist ein Scharnier 27 auf, dessen Scharnierachse horizontal verläuft, wobei über das Scharnier 27 die Führungsschiene 5 zwischen horizontal heruntergeklappter Funktionsposition (Fig. 6) und einer gegenüber dem darunterliegenden Stützarm 4 aufgeschwenkten bzw. hochgeklappten Außerfunktionsposition (Fig. 7) zu verschwenken ist. Außerdem ist in den Figuren 6 und 7 eine Höheneinstelleinrichtung 28 zu erkennen, über die der obere Teil des Schwenk- und Drehgelenks 6 einschließlich der daran gehaltenen Führungsschiene 5 in der Höhe relativ zum darunterliegenden Schwenkarm 4 einzustellen ist. Die Höheneinstelleinrichtung 28 ist insbesondere als Stellschraube ausgeführt.

Fig. 8 ist die Funktionsweise der Feststelleinrichtung zu entnehmen, über die die aktuelle Winkellage des Schwenk- und Drehgelenks 6 einschließlich Führungsschiene 5 zu arretieren ist. Die Feststelleinrichtung 24 besteht aus einer Stellschraube, die radial in die Wandung der Lageraufnahme 20 einragt und eine Klemmplatte 29 radial verschiebt. Die Klemmplatte 29 kann hierdurch in Kontakt mit der das Schwenk- und Drehgelenk 6 einfassenden inneren Wandung der Lageraufnahme 20 gelangen und diese radial nach innen drücken, wodurch das Schwenk- und Drehgelenk 6 mit einer radial wirkenden Reib- bzw. Klemmkraft beaufschlagt wird.

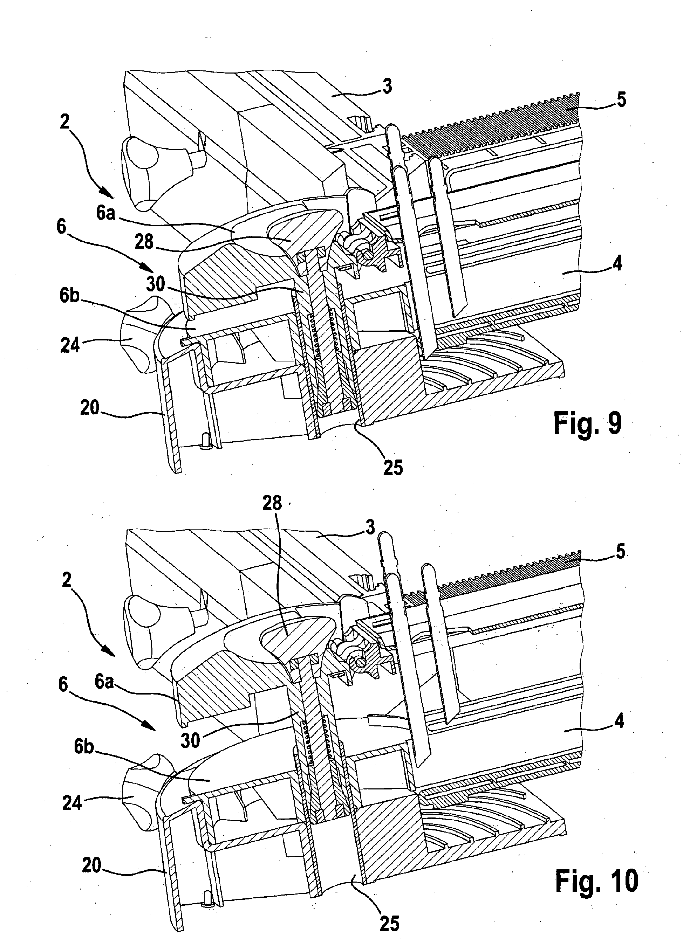

In den Figuren 9 und 10 ist die Höheneinstelleinrichtung 28 im Detail dargestellt. Um die Höheneinstellung der Führungsschiene 5 durchführen zu können, ist das Schwenk- und Drehgelenk 6 zweiteilig aufgebaut mit einem oberen, in der Höhe verstellbaren Teil 6a und einem unteren, in die Lageraufnahme 20 eingesetzten Teil 6b, der zwar um die Hochachse verdrehbar ausgeführt, nicht jedoch in der Höhe einstellbar ist. Ein einteilig mit dem oberen Teil 6a des Schwenk- und Drehgelenks 6 ausgebildeter Achsstift 30, der hohlzylindrisch ausgeführt ist, ragt in die Ausnehmung 25 ein, die in der Lageraufnahme 20 gebildet ist. In dem Achsstift 30 ist die als Stellschraube ausgeführte Höheneinstelleinrichtung 28 aufgenommen. Durch Verdrehen der Stellschraube 28 bewegt sich der obere Teil 6a des Schwenk- und Drehgelenks 6 axial nach oben bzw. nach unten.

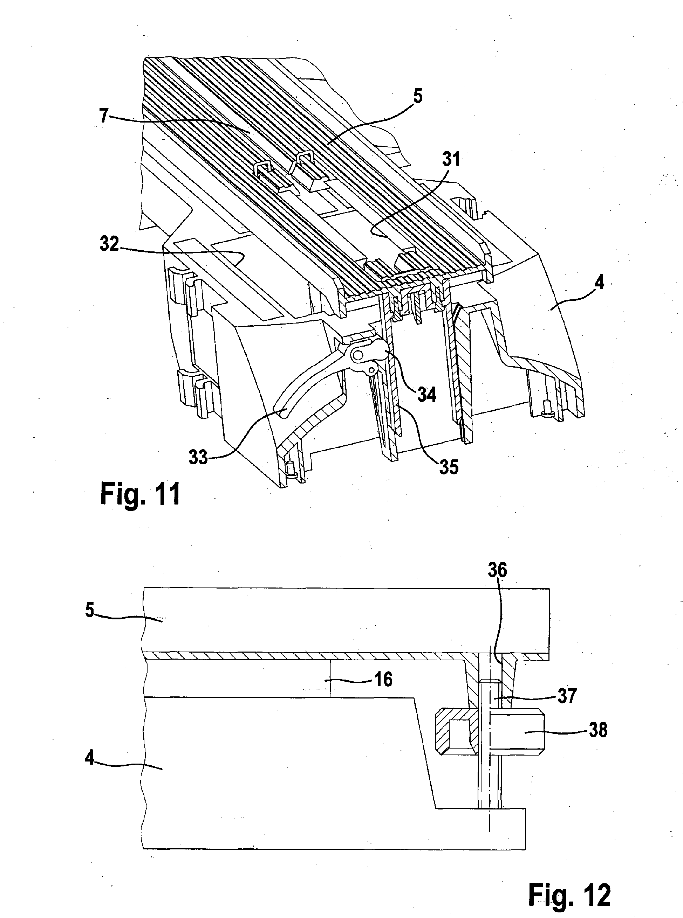

In Fig. 11 ist der stirnseitige Endbereich von Stützarm 4 und Führungsschiene 5 auf der dem Drehgelenk abgewandten Seite dargestellt. Benachbart zur freien Stirnseite ist in die Führungsschiene 5 eine verbreiterte Führungsausnehmung 31 eingebracht, in die die Führungsnut 7 einmündet, wobei die Führungsausnehmung 31 gegenüber der Führungsnut 7 erheblich breiter ausgeführt ist. Der Führungsausnehmung 31 ist eine darunterliegende, in den Stützarm 4 eingebrachte Ausnehmung 32 zugeordnet. Führungsausnehmung 31 und die Ausnehmung 32 im Stützarm 4 ermöglichen im Rahmen der Breite der Führungsausnehmung 31 eine Bearbeitung des Werkstückes schräg oder quer zur Richtung der Führungsnut 7.

Außerdem ist in Fig. 11 eine Lagefixiereinrichtung zur Fixierung der horizontalen Position der Führungsschiene 5 am darunterliegenden Stützarm 4 in einer modifizierten Ausführung dargestellt. Diese Lagefixiereinrichtung besteht aus einem Hebel 33 und einem vom Hebel 33 betätigbaren Klemmbolzen 34, wobei der Hebel 33 und der Klemmbolzen 34 jeweils am Stützarm 4 gelagert bzw. angeordnet sind. Durch Betätigung des Hebels 33 wird der Klemmbolzen 34 seitlich gegen eine Schiene 35 gedrückt, die einteilig mit der Führungsschiene 5 ausgebildet ist und sich vertikal nach unten erstreckt. Die über den Hebel 33 und den Klemmbolzen 34 erzeugbare Klemmkraft reicht aus, um die Führungsschiene 5 mit hinreichender Sicherheit am Stützarm 4 zu fixieren.

In Fig. 12 ist ein weiteres Ausführungsbeispiel für eine Lagefixierung sowie Höheneinstellung der Führungsschiene 5 gegenüber dem Stützarm 4 aus dem Bereich der freien, dem Schwenk- und Drehgelenk abgewandten Stirnseite dargestellt. Auf der Unterseite im Bereich der Stirnseite befindet sich an der Führungsschiene 5 ein Dom mit einer darin eingebrachten Aufnahme 36, die ggf. geringfügig konisch ausgebildet sein kann und zur Aufnahme eines Gewindebolzens 37 dient, der vertikal angeordnet ist und fest mit dem Stützarm 4 verbunden ist. Am Gewindebolzen 37 ist ein Verstellrad 38 drehbar gehalten, an dem die Stirnseite des Doms mit der Aufnahme 36 anliegt. Durch Verdrehen des Verstellrades 38 wird die Führungsschiene 5 in der Höhe auf und ab bewegt. Außerdem bewirkt das Einragen der freien Stirnseite des Gewindebolzens 37 in die Aufnahme 36 eine zusätzliche Lagefixierung.

## Patentansprüche

1. Aufnahme- und Führungsvorrichtung zur Aufnahme eines Werkstücks und Führung eines Zerspanungswerkzeugs, insbesondere einer Stichsäge, bestehend aus einem Aufnahmegestell (2) mit einer Auflagefläche (3) für das Werkstück (16) und einer zwischen einer Funktions- und einer Außerfunktionsposition verstellbaren Führungsschiene (5) für das Zerspanungswerkzeug (17), wobei sich in der Funktionsposition die Führungsschiene (5) in einer Position oberhalb der Auflagefläche (3) im Aufnahmegestell (2) befindet, und mit einem an der Aufnahme- und Führungsvorrichtung (1) angeordneten Stützarm (4), an dem die Führungsschiene (5) in der Funktionsposition abgestützt ist, wobei der Stützarm (4) und die Führungsschiene (5) zueinander eine Relativbewegung ausüben können, wobei die Führungsschiene (5) verschwenkbar zwischen der Funktions- und Außerfunktionsposition gehalten ist, wobei die Schwenkachse horizontal verläuft und die Führungsschiene (5) zur Überführung zwischen der Funktions- und Außerfunktionsposition hoch- bzw. herunterzuklappen ist, **dadurch gekennzeichnet, dass** die Führungsschiene, (5) und gegenbenenfalls der Stützarm (4) verdrehbar am Aufnahmegestell (2) gelagert ist, wobei die Führungsschiene (5) gegenüber einer orthogonal zur Längsrichtung der Auflagefläche (3) angeordneten Mittellage in beide Richtungen verdreht werden kann, insbesondere um ca. +-45°.

2. Aufnahme- und Führungsvorrichtung nach Anspruch 1,
**dadurch gekennzeichnet, dass** die Auflagefläche (3) teilweise von dem Stützarm (4) gebildet ist.

3. Aufnahme- und Führungsvorrichtung nach Anspruch 3,
**dadurch gekennzeichnet, dass** die Führungsschiene (5) in der bzw. parallel zur Ebene der Auflagefläche (3) verdrehbar ist.

4. Aufnahme- und Führungsvorrichtung nach einem der Ansprüche 3 bis 5,
**dadurch gekennzeichnet, dass** in das Aufnahmegestell (2) Begrenzungsanschläge (11) zur Begrenzung der Drehbewegung der Führungsschiene (5) eingebracht sind.

5. Aufnahme- und Führungsvorrichtung nach einem der Ansprüche 3 bis 6,
**dadurch gekennzeichnet, dass** eine Feststelleinrichtung (24) zur Arretierung der Winkelposition der Führungsschiene (5) vorgesehen ist.

6. Aufnahme- und Führungsvorrichtung nach einem der Ansprüche 3 bis 7,
**dadurch gekennzeichnet, dass** der Stützarm (4) und die Führungsschiene (5) über ein gemeinsames Drehgelenk (6) verdrehbar am Aufnahmegestell (2) gehalten sind.

7. Aufnahme- und Führungsvorrichtung nach einem der Ansprüche 1 bis 8 ,
**dadurch gekennzeichnet, dass** mindestens ein Abstützblock (9) zur Abstützung des Aufnahmegestells (2) vorgesehen ist.

8. Aufnahme- und Führungsvorrichtung nach Anspruch 9,
**dadurch gekennzeichnet, dass** der Abstützblock (9) über eine Verbindungsstange (10) mit dem Aufnahmegestell (2) verbunden ist.

9. Aufnahme- und Führungsvorrichtung nach einem der Ansprüche 1 bis 10,
**dadurch gekennzeichnet, dass** das Aufnahmegestell (2) eine die Auflagefläche (3) begrenzende Stützwand (12) aufweist.

10. Aufnahme- und Führungsvorrichtung nach Anspruch 11 ,
**dadurch gekennzeichnet, dass** in die Stützwand (12) Ausnehmungen (13) für Spanneinrichtungen (19) eingebracht sind.

11. Aufnahme- und Führungsvorrichtung nach einem der Ansprüche 1 bis 12 ,
**dadurch gekennzeichnet, dass** in die Führungsschiene (5) eine sägeschlitzartige Führungsnut (7) als Führungseinrichtung für das Zerspanungswerkzeug (17) eingebracht ist.

12. Aufnahme- und Führungsvorrichtung nach Anspruch 13 ,
**dadurch gekennzeichnet, dass** der Führungsnut (7) ein Sägeschlitz (8) im Stützarm (4) zugeordnet ist.

13. Aufnahme- und Führungsvorrichtung nach Anspruch 13 oder 14 ,
**dadurch gekennzeichnet, dass** die Führungsnut (7) abschnittsweise zu einer Führungsausnehmung (31) erweitert ist.

14. Aufnahme- und Führungsvorrichtung nach Anspruch 15 ,
**dadurch gekennzeichnet, dass** der Führungsausnehmung (31) in der Führungsschiene (5) eine Ausnehmung (32) im Stützarm (4) zugeordnet ist.

15. Aufnahme- und Führungsvorrichtung nach einem der Ansprüche 1 bis 16 ,
**dadurch gekennzeichnet, dass** die Führungsschiene (5) höheneinstellbar ausgebildet ist.

16. Aufnahme- und Führungsvorrichtung nach Anspruch 17,
**dadurch gekennzeichnet, dass** die Führungsschiene (5) an einer Stirnseite über eine Stellschraube (28) höheneinstellbar gehalten ist.

17. Aufnahme- und Führungsvorrichtung nach einem der Ansprüche 1 bis 18 ,
**dadurch gekennzeichnet, dass** an einer Stirnseite der Führungsschiene (5) eine Arretiereinrichtung oder ein Befestigungselement, insbesondere ein Stift (14), angeordnet ist, das in Funktionsposition zur Lagefixierung am Stützarm (4) zu befestigen ist.

18. Aufnahme- und Führungsvorrichtung nach einem der Ansprüche 1 bis 19,
**dadurch gekennzeichnet, dass** auf die Führungsschiene (5) eine Führungsplatte (22) für das Zerspanungswerkzeug (17) aufgesetzt ist, die entlang der Führungsnut (7) längsverschieblich gehalten ist.

## Claims

1. Receiving and guiding apparatus for receiving a workpiece and guiding a cutting tool, in particular a jigsaw, consisting of a receiving frame (2) having a bearing surface (3) for the workpiece (16) and a guide rail (5) for the cutting tool (17), said guide rail (5) being adjustable between a functional position and a non-functional position, wherein, in the functional position, the guide rail (5) is located in a position above the bearing surface (3) in the receiving frame (2), and having a support arm (4) arranged on the receiving and guiding apparatus (1), the guide rail (5) being supported on said support arm (4) in the functional position, wherein the support arm (4) and the guide rail (5) can execute a relative movement with respect to one another, wherein the guide rail (5) is held so as to be pivotable between the functional position and the non-functional position, wherein the pivot axis extends horizontally and the guide rail (5) is intended to be flapped up or down in order to be transferred between the functional position and the non-functional position, **characterized in that** the guide rail (5) and optionally the support arm (4) are mounted in a rotatable manner on the receiving frame (2), wherein the guide rail (5) can be rotated, in particular through about +/-45° in both directions with respect to a central position arranged orthogonally to the longitudinal direction of the bearing surface (3).

2. Receiving and guiding apparatus according to Claim 1, **characterized in that** the bearing surface (3) is formed partially by the support arm (4).

3. Receiving and guiding apparatus according to Claim 3, **characterized in that** the guide rail (5) is rotatable in or parallel to the plane of the bearing surface (3).

4. Receiving and guiding apparatus according to one of Claims 3 to 5, **characterized in that** limit stops (11) for limiting the rotary movement of the guide rail (5) have been introduced into the receiving frame (2).

5. Receiving and guiding apparatus according to one of Claims 3 to 6, **characterized in that** a fixing device (24) for locking the angular position of the guide rail (5) is provided.

6. Receiving and guiding apparatus according to one of Claims 3 to 7, **characterized in that** the support arm (4) and the guide rail (5) are held on the receiving frame (2) in a rotatable manner via a common rotary joint (6).

7. Receiving and guiding apparatus according to one of Claims 1 to 8, **characterized in that** at least one supporting block (9) for supporting the receiving frame (2) is provided.

8. Receiving and guiding apparatus according to Claim 9, **characterized in that** the supporting block (9) is connected to the receiving frame (2) via a connecting rod (10).

9. Receiving and guiding apparatus according to one of Claims 1 to 10, **characterized in that** the receiving frame (2) has a support wall (12) delimiting the bearing surface (3).

10. Receiving and guiding apparatus according to Claim 11, **characterized in that** cutouts (13) for clamping devices (19) have been introduced into the support wall (12).

11. Receiving and guiding apparatus according to one of Claims 1 to 12, **characterized in that** a kerf-like guide groove (7) has been introduced into the guide rail (5) as a guiding device for the cutting tool (17).

12. Receiving and guiding apparatus according to Claim 13, **characterized in that** the guide groove (7) is assigned a kerf (8) in the support arm (4).

13. Receiving and guiding apparatus according to Claim 13 or 14, **characterized in that** the guide groove (7) has been regionally widened to form a guide cutout (31).

14. Receiving and guiding apparatus according to Claim 15, **characterized in that** the guide cutout (31) in the guide rail (5) is assigned a cutout (32) in the support arm (4).

15. Receiving and guiding apparatus according to one of Claims 1 to 16, **characterized in that** the guide rail (5) is configured to be vertically adjustable.

16. Receiving and guiding apparatus according to Claim 17, **characterized in that** the guide rail (5) is held on an end side so as to be vertically adjustable via an adjusting screw (28).

17. Receiving and guiding apparatus according to one of Claims 1 to 18, **characterized in that** a locking device or a fastening element, in particular a pin (14) is arranged on an end side of the guide rail (5), said pin (14) being intended to be fastened on the support arm (4) in the functional position for position fixing.

18. Receiving and guiding apparatus according to one of Claims 1 to 19, **characterized in that** a guide plate (22) for the cutting tool (17) is placed on the guide rail (5), said guide plate (22) being held so as to be longitudinally displaceable along the guide groove (7).

## Revendications

1. Dispositif de réception et de guidage destiné à recevoir une pièce et à guider un outil d'enlèvement de copeaux, en particulier une scie sauteuse, se composant d'un châssis de réception (2) avec une face de dépôt (3) pour la pièce (16) et d'un rail de guidage (5) déplaçable entre une position de fonction et une position hors de fonction pour l'outil d'enlèvement de copeaux (17), dans lequel le rail de guidage (5) se trouve, dans la position de fonction, dans une position située au-dessus de la face de dépôt (3) dans le châssis de réception (2), et avec un bras de soutien (4) agencé sur le dispositif de réception et de guidage (1), sur lequel le rail de guidage (5) est appuyé dans la position de fonction, dans lequel le bras de soutien (4) et le rail de guidage (5) peuvent opérer un mouvement relatif l'un par rapport à l'autre, dans lequel le rail de guidage (5) est maintenu de façon pivotante entre la position de fonction et la position hors de fonction, dans lequel l'axe de pivotement est orienté horizontalement et le rail de guidage (5) peut être relevé ou abaissé pour son déplacement entre la position de fonction et la position hors de fonction, **caractérisé en ce que** le rail de guidage (5) et éventuellement le bras de soutien (4) est monté de façon rotative sur le châssis de réception (2), dans lequel le rail de guidage (5) peut tourner dans les deux sens, en particulier d'environ ±45°, par rapport à une position moyenne disposée orthogonalement à la direction longitudinale de la face de dépôt (3).

2. Dispositif de réception et de guidage selon la revendication 1, **caractérisé en ce que** la face de dépôt (3) est formée en partie par le bras de soutien (4).

3. Dispositif de réception et de guidage selon la revendication 3, **caractérisé en ce que** le rail de guidage (5) peut tourner dans ou parallèlement au plan de la face de dépôt (3).

4. Dispositif de réception et de guidage selon l'une quelconque des revendications 3 à 5, **caractérisé en ce que** des butées de limitation (11) sont installées dans le châssis de réception (2) pour limiter le mouvement de rotation du rail de guidage (5).

5. Dispositif de réception et de guidage selon l'une quelconque des revendications 3 à 6, **caractérisé en ce qu'**il est prévu un dispositif de fixation (24) pour bloquer la position angulaire du rail de guidage (5).

6. Dispositif de réception et de guidage selon l'une quelconque des revendications 3 à 7, **caractérisé en ce que** le bras de soutien (4) et le rail de guidage (5) sont maintenus de façon rotative sur le châssis de réception (2) au moyen d'une articulation tournante commune (6).

7. Dispositif de réception et de guidage selon l'une quelconque des revendications 1 à 8, **caractérisé en ce qu'**il est prévu au moins un bloc d'appui (9) destiné à appuyer le châssis de réception (2).

8. Dispositif de réception et de guidage selon la revendication 9, **caractérisé en ce que** le bloc d'appui (9) est relié au châssis de réception (2) au moyen d'une barre de liaison (10).

9. Dispositif de réception et de guidage selon l'une quelconque des revendications 1 à 10, **caractérisé en ce que** le châssis de réception (2) présente une paroi d'appui (12) limitant la face de dépôt (3).

10. Dispositif de réception et de guidage selon la revendication 11, **caractérisé en ce que** des évidements (13) sont pratiqués dans la paroi d'appui (12) pour des dispositifs de serrage (19).

11. Dispositif de réception et de guidage selon l'une quelconque des revendications 1 à 12, **caractérisé en ce qu'**une rainure de guidage en forme de trait de scie (7) est pratiquée dans le ail de guidage (5) en tant que dispositif de guidage pour l'outil d'enlèvement de copeaux (17).

12. Dispositif de réception et de guidage selon la revendication 13, **caractérisé en ce qu'**un trait de scie (8) dans le bras de soutien (4) est associé à la rainure de guidage (7).

13. Dispositif de réception et de guidage selon la revendication 13 ou 14, **caractérisé en ce que** la rainure de guidage (7) est élargie localement en un évidement de guidage (31).

14. Dispositif de réception et de guidage selon la revendication 15, **caractérisé en ce qu'**un évidement (32) dans le bras de soutien (4) est associé à l'évidement de guidage (31) dans le rail de guidage (5).

15. Dispositif de réception et de guidage selon l'une quelconque des revendications 1 à 16, **caractérisé en ce que** le rail de guidage (5) est réglable en hauteur.

16. Dispositif de réception et de guidage selon la revendication 17, **caractérisé en ce que** le rail de guidage (5) est maintenu de façon réglable en hauteur au moyen d'une vis de serrage (28) sur une face frontale.

17. Dispositif de réception et de guidage selon l'une quelconque des revendications 1 à 18, **caractérisé en ce qu'**un dispositif de blocage ou un élément de fixation, en particulier une goupille (14), qui doit être fixée en position de fonction afin de fixer la position sur le bras de soutien (4), est agencée sur une face frontale du rail de guidage (5).

18. Dispositif de réception et de guidage selon l'une quelconque des revendications 1 à 19, **caractérisé en ce qu'**une plaque de guidage (22) pour l'outil d'enlèvement de copeaux (17) est posée sur le rail de guidage (5), et est maintenue de façon mobile longitudinalement le long de la rainure de guidage (7).
